# FASCICULE DE BREVET EUROPEEN

(11) **EP 2 533 200 B1**
(45) Date de publication et mention de la délivrance du brevet: **19.03.2014**
(21) Numéro de dépôt: 12290180.4
(22) Date de dépôt: 01.06.2012
(51) Int. Cl.: G06T 7/00, G06T 17/05

(54) **Procédé et dispositif pour déterminer automatiquement des lignes de crete d'une zone à hauteur variable**
Verfahren und Vorrichtung zur automatischen Bestimmung der Kammlinien einer Zone mit variabler Höhe
Method and device for automatically determining ridge lines of an area with variable height

(30) Priorité: 09.06.2011 FR 1101772
(43) Date de publication de la demande: 12.12.2012
(73) Titulaire: MBDA France, 75016 Paris (FR)
(72) Inventeur: Lecuelle, Jérémy, 92290 Chatenay-Malabry (FR)
(74) Mandataire: Hauer, Bernard

(56) Documents cités:
- WEIBEL, R., HELLER, M: "Digital Terrain Modeling", GEOGRAPHICAL INFORMATION SYSTEMS: PRINCIPLES AND APPLICATIONS, 1991, pages 269-297, XP002667192, London Extrait de l'Internet: URL:http://www.wiley.com/legacy/wileychi/g is/Volume1/BB1v1_ch19.pdf [extrait le 2012-01-16]
- Viviana Mascardi: "Extraction of Significant Terrain Features from RSG and TIN: A Survey", Dipartimento di Informatica e Scienze dell'Informazione -Technical Reports of Viviana Mascardi , 19 décembre 1998 (1998-12-19), pages 1-24, XP002667193, Extrait de l'Internet: URL:http://www.disi.unige.it/person/Mascar diV/Download/graphics98.ps.gz [extrait le 2012-01-16]
- O'CALLAGHAN J F ET AL: "The extraction of drainage networks from digital elevation data", COMPUTER VISION, GRAPHICS, AND IMAGE PROCESSING USA, vol. 28, no. 3, décembre 1984 (1984-12), pages 323-344, XP002667194, ISSN: 0734-189X
- Kate Beard: "Digital Terrain Model", Spatial Information Science and Engineering - Kate Beard Lecture SIE 510 GIS Applications , 17 janvier 2011 (2011-01-17), pages 1-13, XP002667195, Extrait de l'Internet: URL:http://www.spatial.maine.edu/~beard/Le ctures510/digital%20terrain%20models%20201 1.pdf [extrait le 2011-01-16]
- JOHAN DE BOCK ET AL: "A Fast Sequential Rainfalling Watershed Segmentation Algorithm", 1 janvier 2005 (2005-01-01), ADVANCED CONCEPTS FOR INTELLIGENT VISION SYSTEMS LECTURE NOTES IN COMPUTER SCIENCE;;LNCS, SPRINGER, BERLIN, DE, PAGE(S) 476 - 482, XP019019709, ISBN: 978-3-540-29032-2 * section 2 *
- SEEMULLER W W: "THE EXTRACTION OF ORDERED VECTOR DRAINAGE NETWORKS FROM ELEVATION DATA", COMPUTER VISION GRAPHICS AND IMAGE PROCESSING, ACADEMIC PRESS, DULUTH, MA, US, vol. 47, no. 1, 1 juillet 1989 (1989-07-01), pages 45-58, XP000086843, DOI: 10.1016/0734-189X(89)90053-4
- MARTZ L W ET AL: "Numerical definition of drainage network and subcatchment areas from digital elevation models", COMPUTERS & GEOSCIENCES UK, vol. 18, no. 6, juillet 1992 (1992-07), pages 747-761, XP002682658, ISSN: 0098-3004

## Description

La présente invention concerne un procédé et un dispositif pour déterminer automatiquement des lignes de crête d'une zone à hauteur variable, en particulier d'une zone géographique.

On sait que la connaissance des lignes de crête du relief d'une zone géographique particulière est, notamment, très utile pour la compréhension rapide des limites des zones d'inter-visibilité par rapport à un point d'observation au sol, en vol, ou sous l'eau.

Ces données permettent notamment à des militaires ou à des forces de l'ordre mobiles de connaître les espaces de progression dans lesquels ils peuvent rester dissimulés par rapport à un ennemi potentiel situé au-delà.

De telles lignes de crête peuvent, en particulier, être utilisées par des éléments mobiles terrestres, aériens ou sous-marins avec une adaptation automatique de l'extraction des lignes de crêtes en fonction de l'altitude et de la position courante de ces éléments mobiles.

Ce concept de lignes de crêtes (relatives à une zone à hauteur variable) peut également être utilisé par analogie dans le domaine médical, notamment dans l'étude du cortex cérébral, pour lequel on peut considérer que des pseudo lignes de crête du cerveau servent de points de départ pour délimiter des zones fonctionnelles.

Pour déterminer de telles lignes de crête, on connaît une méthode réalisant une extraction par analyse des courbures d'une surface triangularisée.

Cette méthode usuelle nécessite toutefois de disposer d'une surface triangularisée, ce qui rend nécessaire un prétraitement des données altimétriques (disponibles sous forme matricielle ou sous forme de trame) .

Cette méthode usuelle n'est donc pas satisfaisante.

Par ailleurs, on connaît, par le document EP-O 863 487, un procédé et un dispositif pour déterminer automatiquement le contour de vallées d'une zone géographique.

En outre, on connaît par un article de R. Weibel et M. Heller intitulé « Digital Terrain Modeling » et publié dans « Geographical information systems : principles and applications », 1991, pages 269 et 297, une méthode d'analyse géomorphométrique permettant d'extraire des zones d'écoulement et de crête. Dans cette méthode, des écoulements selon la pente la plus raide sont simulés à chaque pixel, et les pixels vers lesquels aucun écoulement ne se produit appartiennent à des zones de crêtes, qui sont ensuite squelettisées pour obtenir les lignes de crête.

La présente invention a pour objet de remédier aux inconvénients précités. Elle concerne un procédé pour déterminer de façon rapide, simple, fiable et à coût réduit, les lignes de crête du relief d'une zone particulière à hauteur variable, notamment d'une zone géographique.

À cet effet, selon l'invention, ledit procédé est remarquable en ce que l'on réalise, de façon automatique, les opérations successives suivantes :
a) à partir d'une image de ladite zone, qui contient les hauteurs de points de cette dernière, on détermine des directions d'écoulement ;
b) à partir desdites directions d'écoulement, on recherche des points source permettant de créer une image binaire, un point source étant un point vers lequel ne conduit aucun point de son voisinage le long desdites directions d'écoulement ;
c) on réalise un filtrage de ladite image binaire pour supprimer des points isolés de manière à obtenir des éléments formés de points source adjacents ;
d) on soumet les éléments ainsi obtenus à un traitement de manière à obtenir un ensemble de lignes formées de points source ; et
e) on crée, à partir dudit ensemble de lignes, un ensemble de successions de segments (Si) illustrant les lignes de crête de ladite zone (ZO), en réalisant les opérations successives suivantes :
   - on effectue un prétraitement pour préparer les données reçues de l'étape d), à une extraction ;
   - on effectue une extraction de lignes de crête, en réalisant les opérations suivantes :
      ○ on sélectionne un point de départ, les positions de maximaux locaux représentant des points de départ ; et
      ○ en procédant de proche en proche, à partir de points voisins du point de départ, on parcourt les lignes de crête jusqu'à ce que l'on rencontre un point de confluence ou une extrémité ; et
   - on effectue un traitement final pour supprimer des doublons et conserver uniquement les segments de longueur supérieure à une longueur de seuil réglable.

Ainsi, grâce à l'invention, on est en mesure de déterminer automatiquement de façon rapide, simple, fiable et à coût réduit, les lignes de crête du relief d'une zone particulière à hauteur variable, notamment d'une zone géographique.

Le procédé conforme à l'invention permet donc d'extraire d'une image de type numérisé de ladite zone considérée, cette image étant par exemple issue d'un fichier usuel de type DTED (« Digital Terrain Elevation Data » en anglais) dans le cas d'une zone géographique terrestre, les lignes de crête du relief, et ceci quel que soit le point d'observation, et de présenter ces lignes de crête sous forme d'un ensemble de successions de segments, une succession de segments représentant une ligne formée d'une suite de segments de droite. Une telle représentation sous forme d'un ensemble de successions de segments peut être utilisée avantageusement dans le cadre d'une exploitation militaire ou dans le cadre d'une exploitation civile.

Dans un mode de réalisation préféré, à l'étape e), on superpose ledit ensemble de successions de segments sur une image de la zone considérée de manière à obtenir une image composée, que l'on peut notamment afficher ou imprimer.

Par ailleurs, de façon avantageuse :
- à l'étape c), on réalise au moins un filtrage médian 3x3 ; et
- à l'étape d), on met en oeuvre une méthode de squelettisation pour réduire lesdits éléments à un ensemble de lignes, centrées sur ces éléments et présentant une épaisseur d'un pixel.

En outre, avantageusement, à l'étape e), on réalise les opérations successives suivantes :
- on effectue un prétraitement pour préparer les données reçues de l'étape d), à une extraction ;
- on effectue une extraction de lignes de crête ; et
- on effectue un traitement final pour supprimer des doublons et conserver uniquement les segments de longueur supérieure à une longueur de seuil réglable.

Le procédé conforme à l'invention est applicable à tout type de relief terrestre. Il est également applicable à tout type de relief sous-marin (exploitation sous-marine), ainsi qu'à tout type de relief planétaire autre que terrestre (exploration spatiale). Enfin, ledit procédé conforme à l'invention peut également être appliqué dans le domaine médical. En effet, le concept de lignes de crêtes (relatives à une zone à hauteur variable) peut être utilisé par analogie dans le domaine médical, notamment dans l'étude du cortex cérébral où les lignes de crête du cerveau servent de points de départ pour délimiter les différentes zones fonctionnelles de ce dernier.

La présente invention concerne également un dispositif pour déterminer automatiquement (de façon rapide, simple, fiable et à coût réduit) les lignes de crête du relief d'une zone particulière à hauteur variable.

À cet effet, selon l'invention, ledit dispositif est remarquable en ce qu'il comporte :
- des moyens pour recevoir une image de ladite zone, qui contient les hauteurs de points de cette dernière ;
- des moyens pour déterminer, à partir de ladite image, des directions d'écoulement ;
- des moyens pour rechercher, à partir desdites directions d'écoulement, des points source permettant de créer une image binaire, un point source étant un point vers lequel ne conduit aucun point de son voisinage le long desdites directions d'écoulement ;
- des moyens pour réaliser un filtrage de ladite image binaire dans le but de supprimer des points isolés de manière à obtenir des éléments formés de points source adjacents ;
- des moyens pour soumettre les éléments ainsi obtenus à un traitement de manière à obtenir un ensemble de lignes formées de points source ;
- des moyens pour créer, à partir dudit ensemble de lignes, un ensemble de successions de segments illustrant les lignes de crête de ladite zone, lesdits moyens comprenant :
   - un élément pour effectuer un prétraitement de manière à préparer les données reçues des moyens à une extraction ;
   - un élément pour effectuer une extraction de lignes de crête, en réalisant les opérations suivantes :
      ○ on sélectionne un point de départ, les positions de maximaux locaux représentant des points de départ ; et
      ○ en procédant de proche en proche, à partir de points voisins du point de départ, on parcourt les lignes de crête jusqu'à ce que l'on rencontre un point de confluence ou une extrémité ; et
   - un élément pour effectuer un traitement postérieur afin de supprimer des doublons et de conserver uniquement les segments de longueur supérieure à une longueur de seuil réglable ; et
- des moyens pour transmettre ledit ensemble de successions de segments à des moyens utilisateurs.

Dans un mode de réalisation particulier, ledit dispositif comporte également :
- des moyens pour superposer ledit ensemble de successions de segments de façon conforme sur une image de ladite zone géographique de manière à obtenir une image composée ;
- des moyens permettant à un opérateur d'entrer des données, et notamment des paramètres de réglage qui permettent de faire varier les caractéristiques dimensionnelles des lignes de crête extraites de la zone géographique analysée ; et/ou
- lesdits moyens utilisateurs.

Ainsi, ledit dispositif permet notamment de déterminer rapidement, sous forme de successions de segments, les lignes de crête du relief d'une zone

déterminée quel que soit le point d'observation. Les lignes de crêtes peuvent représenter des éléments stratégiques dans diverses situations, par exemple lors d'un déploiement de systèmes d'armes, la disposition des lignes de crêtes permettant de placer de façon optimale ces systèmes d'armes, ou lors d'un placement des troupes, les lignes de crêtes étant les limites des domaines d'inter-visibilité. Par analogie, ledit dispositif permet également d'extraire des pseudo lignes de crête pour des applications variées, en particulier dans le domaine médical.
Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 à 5 montrent schématiquement des images obtenues à la fin de différentes étapes successives, lors de la mise en oeuvre du procédé conforme à l'invention.
La figure 6 montre schématiquement une image composée susceptible d'être obtenue à l'aide d'un dispositif conforme à l'invention.

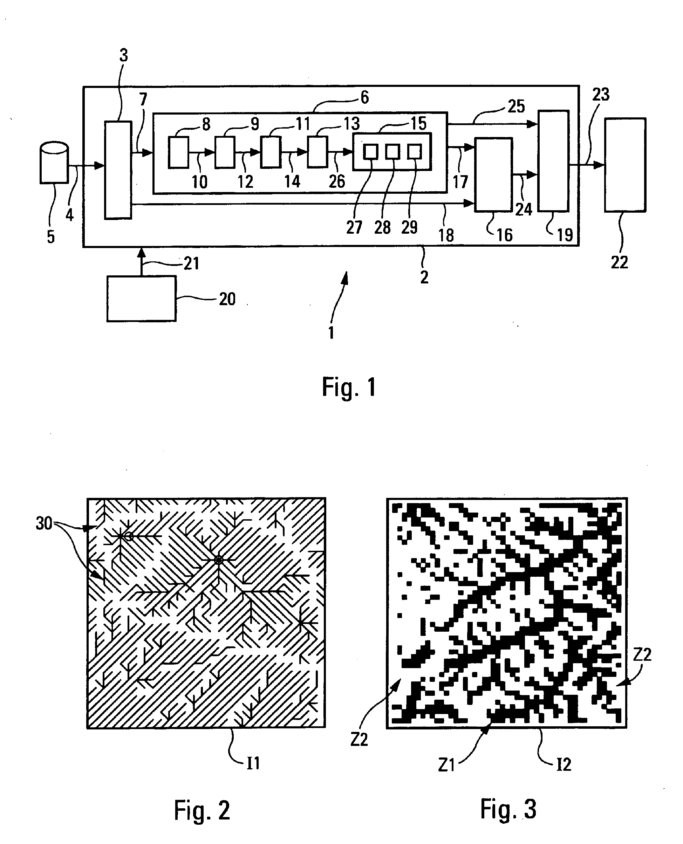

Le dispositif 1 conforme à l'invention et représenté schématiquement sur la figure 1 est destiné à déterminer automatiquement (de façon rapide, simple, fiable et à coût réduit) les lignes de crête du relief d'une zone particulière ZO à hauteur variable, et notamment d'une zone géographique particulière.

Pour ce faire, ledit dispositif 1 comporte, selon l'invention, une unité de traitement 2 qui comprend :
- des moyens 3 d'acquisition de données, pour recevoir une image de la zone ZO (par exemple géographique) à analyser. Cette image est de type numérisé et contient les hauteurs de points de cette zone ZO. Cette image peut contenir par exemple des données altimétriques de points d'une zone géographique. Elle est reçue (via une liaison 4 de transmission de données) d'un fichier, de préférence d'un fichier DTED (« Digital Terrain Elevation Data » en anglais), qui est stocké dans une base de données 5 usuelle ; et
- des moyens 6 de traitement d'image, qui sont reliés par une liaison 7 auxdits moyens 3.

Selon l'invention, lesdits moyens 6 comprennent :
- des moyens 8 pour déterminer, à partir de l'image reçue, des directions d'écoulement 30 ;
- des moyens 9 qui sont reliés par l'intermédiaire d'une liaison 10 auxdits moyens 8 et qui sont formés de manière à rechercher, à partir desdites directions d'écoulement 30, des points source permettant de créer une image binaire I2, un point source étant un point vers lequel ne conduit aucun point de son voisinage le long desdites directions d'écoulement 30 ;
- des moyens 11 qui sont reliés par l'intermédiaire d'une liaison 12 auxdits moyens 9 et qui sont formés de manière à réaliser un filtrage de ladite image binaire I2 pour supprimer des points isolés afin d'obtenir des éléments 31 formés de points source adjacents ;
- des moyens 13 qui sont reliés par l'intermédiaire d'une liaison 14 auxdits moyens 11 et qui sont formés de manière à soumettre les éléments 31 ainsi obtenus à un traitement afin d'obtenir un ensemble de lignes 32 formées de points source ; et
- des moyens 15 qui sont reliés par l'intermédiaire d'une liaison 26 auxdits moyens 13 et qui sont formés de manière à créer, à partir dudit ensemble de lignes 32, un ensemble de successions de segments Si illustrant les lignes de crête de ladite zone ZO.

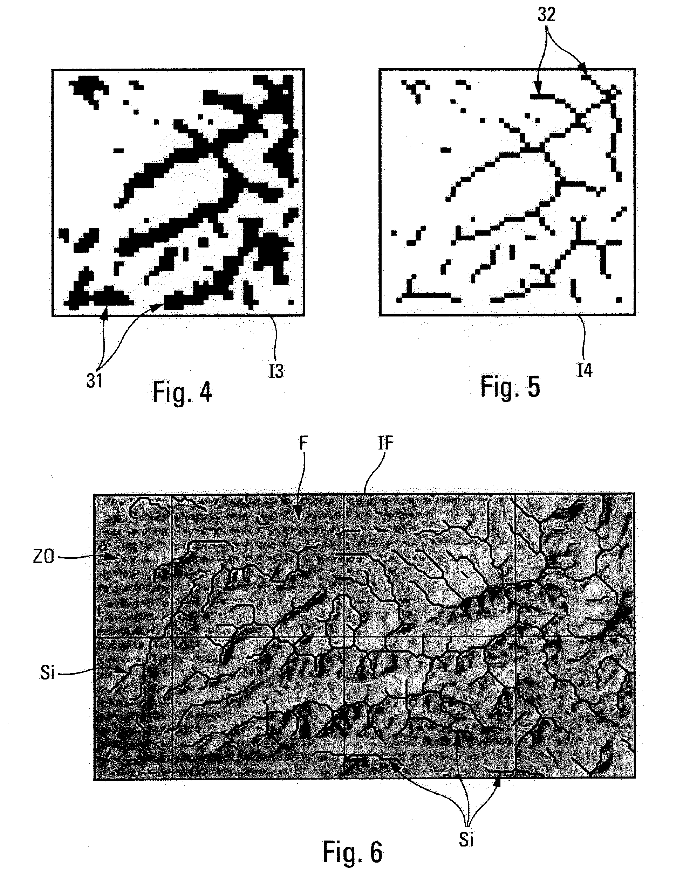

En outre, ladite unité de traitement 2 comporte, de plus, des moyens 16 qui sont, par exemple, reliés par l'intermédiaire de liaisons 17 et 18 respectivement auxdits moyens 6 et 3 et qui sont formés de manière à superposer ledit ensemble de successions de segments Si (reçu des moyens 6) sur une image F de ladite zone géographique (reçue des moyens 3) par exemple une photo réalisée par un satellite. Cette superposition est réalisée de façon conforme, c'est-à-dire que l'on superpose à chaque fois les informations relatives aux mêmes coordonnées dans le plan de l'image. On obtient alors une image dite composée (ou hybride) IF, telle que celle représentée par exemple sur la figure 6, qui peut être transmise par l'intermédiaire de moyens 19 de transmission d'informations.

En outre, ledit dispositif 1 comporte, de plus :
- des moyens 20, par exemple un clavier ou tout autre moyen de saisie de données, qui sont par exemple reliés par l'intermédiaire d'une liaison 21 à ladite unité de traitement 2 et qui sont formés de manière à permettre à un opérateur d'entrer des données dans ladite unité de traitement 2, et en particulier des paramètres dits de réglage, précisés ci-dessous ; et
- des moyens utilisateurs 22, en particulier des moyens d'affichage ou d'impression, qui permettent de présenter à un opérateur les résultats des traitements mis en oeuvre par l'unité de traitement 2 (et reçus via une liaison 23 desdits moyens 19). Lesdits moyens 19 de l'unité 2 sont reliés par l'intermédiaire de liaisons 24 et 25 respectivement auxdits moyens 1 6 et 6.

Ainsi, le dispositif 1 conforme à l'invention est en mesure de déterminer automatiquement (de façon rapide, simple, fiable et à coût réduit) les lignes de crête du relief d'une zone ZO particulière à hauteur variable, notamment d'une zone géographique.

Ledit dispositif 1 permet donc d'extraire d'une image de type numérisé de ladite zone considérée, cette image étant par exemple issue d'un fichier usuel de type DTED (« Digital Terrain Elevation Data » en anglais) dans le cas d'une zone géographique terrestre, les lignes de crête du relief, et ceci quel que soit le point d'observation, et de présenter les lignes de crête sous forme d'un ensemble de successions de segments Si. Dans le cadre de la présente invention, une succession Si quelconque de segments représente une ligne qui est formée d'une suite de segments de droite. Une telle représentation sous forme d'un ensemble de successions de segments Si peut être utilisée avantageusement dans le cadre d'une exploitation militaire ou dans le cadre d'une exploitation civile.

Comme précisé ci-dessous, ledit dispositif 1 utilise des paramètres de réglage qui sont susceptibles d'être réglés, c'est-à-dire modifiés, par un opérateur à l'aide des moyens 20, et qui permettent de faire varier les caractéristiques dimensionnelles des lignes de crête extraites de la zone Z0 analysée, ce qui permet une application de l'invention à tout type de relief terrestre. Le dispositif 1 est également applicable à tout type de relief sous-marin (exploitation sous-marine), ainsi qu'à tout type de relief planétaire autre que terrestre (exploration spatiale). Il peut également être appliqué au domaine médical, notamment dans l'étude du cortex cérébral où des lignes de crête du cerveau permettent de délimiter ses différentes zones fonctionnelles.

On notera que l'extraction mise en oeuvre par la présente invention est basée sur l'observation suivante : les lignes de crêtes sont formées majoritairement par des points qui sont des sources du réseau hydrographique. Cependant, tous les points source n'appartiennent pas systématiquement à une ligne de crête, d'où la nécessité d'un filtrage. On sépare la recherche des lignes de crête en deux étapes principales : une extraction des points sources et une exploitation de ces points source qui conduit à la formation des lignes de crête. La première étape du traitement utilise des techniques similaires à celles utilisées dans l'extraction des cours d'eau, alors que la seconde étape utilise des méthodes de traitement d'images.

Pour pouvoir déterminer les points source, c'est-à-dire les points dont aucun point du voisinage ne conduit vers eux, les moyens 8 doivent définir pour chaque point de l'image du relief, une direction d'écoulement. L'algorithme utilisé est le même que celui qui intervient, de façon usuelle, dans la définition des directions simples dans l'extraction de cours d'eau. A chaque point de l'image des hauteurs (ou altitudes) est donc associée une valeur (comprise entre 1 et 8) qui indique vers lequel de ses voisins l'écoulement se dirige. On réalise donc une simulation d'une pluie virtuelle sur le fichier de données altimétriques numérisées de la zone (géographique) concernée et on calcule l'écoulement de cette pluie virtuelle, ce qui permet d'obtenir les directions d'écoulement pour chaque point de la zone considérée et de construire des lignes 30 représentant de pseudo cours d'eau, comme illustré sur la figure 2 qui montre en vue de dessus l'image I1 résultant des traitements mis en oeuvre par les moyens 8.

Les moyens 9 recherchent ensuite les points source, c'est-à-dire les points dont aucun point du voisinage ne conduit vers eux en suivant les directions d'écoulement 30 de la figure 2. Lesdits moyens 9 construisent une image binaire I2, comme représenté sur la figure 3. Cette image binaire comprend deux types de zones Z1 et Z2 (illustrées respectivement en noir et en blanc), à savoir celles Z1 représentant les points source et celles Z2 représentant les points qui ne sont pas des points source.

Il est nécessaire d'appliquer sur cette image binaire I2 un filtrage aux points source ainsi déterminés (zones Z1). Ce traitement mis en oeuvre par les moyens 11 est un filtrage médian 3x3. Le filtrage de l'image des points source a pour objet de supprimer les points isolés. On obtient alors des formes 31 constituées de points sources contigus, comme représenté sur l'image I3 des points source filtrée montrée sur la figure 4.

En fonction des besoins sur les lignes de crêtes, on peut envisager de réitérer ce processus de filtrage plusieurs fois. Un paramètre de réglage permet à un opérateur de définir (à l'aide des moyens 20) le nombre de fois que le filtrage sera appliqué à l'image.

Ensuite, les moyens 13 soumettent les éléments 31 ainsi obtenus à un traitement de manière à obtenir un ensemble de lignes 32 formées de points source contigus. Pour faire apparaître les lignes de crête sur l'image filtrée des points source, les moyens 13 utilisent une méthode de squelettisation qui permet de réduire les formes présentes sur l'image en un ensemble de courbes 32 d'épaisseur un pixel, centrées sur les formes d'origine. Le résultat obtenu (image I4) est représenté sur la figure 5.

Par ailleurs, lesdits moyens 15 qui sont destinés à créer, finalement, l'ensemble de successions de segments Si comprennent :
- un élément 27 pour effectuer un prétraitement de manière à préparer les données reçues des moyens 13 à une extraction ;
- un élément 28 pour effectuer une extraction de lignes de crête ; et
- un élément 29 pour effectuer un traitement postérieur afin de supprimer des doublons et de conserver uniquement les segments de longueur supérieure à une longueur de seuil réglable.

Le prétraitement de l'image mis en oeuvre par l'élément 27 a pour objet de préparer l'image à l'algorithme d'extraction des lignes de crêtes. Son objectif est de modifier l'image pour pouvoir identifier facilement les extrémités et les points de confluence des lignes de crêtes. La valeur d'un pixel d'une ligne de crête est remplacée par la valeur du voisinage qui correspond au nombre de voisins qui appartiennent à une ligne de crête.

Ce traitement est réalisé de la manière suivante :
- l'image des crêtes en entrée est une image binaire où 0 est associé aux lignes de crêtes et 255 aux autres pixels ;
- une première modification du format permet d'obtenir une image binaire où 1 est associé aux lignes de crêtes et 0 au reste de l'image. On peut alors remplacer la valeur des pixels par la valeur du voisinage en utilisant une convolution ;
- une seconde modification du format est une inversion qui permet d'obtenir une image binaire où 255 est associé aux lignes de crêtes et 0 au reste de l'image. L'image ainsi obtenu peut alors être utilisée comme un masque pour garder le résultat de la convolution seulement sur les lignes de crêtes. Ce traitement est réalisé par une porte logique ET entre les deux images.

Dans l'image obtenue (non représentée), les points de confluence des lignes de crête sont les pixels dont la valeur est supérieure strictement à 2, et les extrémités sont ceux dont la valeur vaut 1.

Par ailleurs, l'élément 28 met en oeuvre une première étape consistant à obtenir les positions des maximums locaux sur l'image. On obtient alors les points à partir desquels l'extraction des lignes de crêtes va être réalisée. Ces points de départ sont généralement des points de confluence (lorsque la valeur du pixel est supérieure strictement à 2) ou des points intérieurs de lignes de crêtes isolées (lorsque le pixel est de valeur 1 ou 2).

L'algorithme d'extraction est le suivant :
- on sélectionne un point de départ. La valeur du pixel indique le nombre de lignes de crêtes partant de ce point ;
- en procédant de proche en proche, à partir des points voisins de ce point de départ, on parcourt les lignes de crêtes en stockant les coordonnées rencontrées jusqu'à ce que l'on rencontre un point de confluence ou une extrémité.

Cet algorithme d'extraction produit un résultat qui comporte des doublons. En effet, une ligne de crête qui est une jonction entre deux points de confluence est extraite deux fois.

Le traitement postérieur mis en oeuvre par l'élément 29 consiste à supprimer ces doublons en comparant les extrémités des lignes de crêtes.

Le traitement mis en oeuvre par l'élément 29 permet également de filtrer les lignes de crête pour garder uniquement celles qui ont une longueur suffisante, c'est-à-dire une longueur qui est supérieure à une longueur minimale. Cette longueur minimale est un paramètre de réglage qui peut être modifié par un opérateur (à l'aide des moyens 20).

Sur la figure 6, on a représenté une image composée IF comprenant un fond F illustrant une image (par exemple satellitaire), à laquelle on a superposé les lignes de crête, c'est-à-dire l'ensemble de successions Si de segments, obtenues grâce à l'invention.

## Revendications

1. Procédé pour déterminer automatiquement des lignes de crête d'une zone particulière à hauteur variable, procédé selon lequel on réalise, de façon automatique, les opérations successives suivantes :
a) à partir d'une image de ladite zone (ZO), qui contient les hauteurs de points de cette dernière, on détermine des directions d'écoulement (30) ;
b) à partir desdites directions d'écoulement (30), on recherche des points source permettant de créer une image binaire (I2), un point source étant un point vers lequel ne conduit aucun point de son voisinage le long desdites directions d'écoulement (30) ;
c) on réalise un filtrage de ladite image binaire (12) pour supprimer des points isolés de manière à obtenir des éléments (31) formés de points source adjacents ;
d) on soumet les éléments (31) ainsi obtenus à un traitement de manière à obtenir un ensemble de lignes (32) formées de points source ; et
e) on crée, à partir dudit ensemble de lignes (32), un ensemble de successions de segments (Si) illustrant les lignes de crête de ladite zone (ZO), en réalisant les opérations successives suivantes :
- on effectue un prétraitement pour préparer les données reçues de l'étape d), à une extraction ;
- on effectue une extraction de lignes de crête, en réalisant les opérations suivantes :
○ on sélectionne un point de départ, les positions de maximaux locaux représentant des points de départ ; et
○ en procédant de proche en proche, à partir de points voisins du point de départ, on parcourt les lignes de crête jusqu'à ce que l'on rencontre un point de confluence ou une extrémité ; et
- on effectue un traitement final pour supprimer des doublons et conserver uniquement les segments de longueur supérieure à une longueur de seuil réglable.

2. Procédé selon la revendication 1,
**caractérisé en ce qu'**à l'étape c), on met en oeuvre au moins un filtrage médian 3x3.

3. Procédé selon l'une des revendications 1 et 2,
**caractérisé en ce qu'**à l'étape d), on met en oeuvre une méthode de squelettisation pour réduire lesdits éléments (31) à un ensemble de lignes (32), centrées sur ces éléments et présentant une épaisseur d'un pixel.

4. Procédé selon l'une quelconque des revendications précédentes,
**caractérisé en ce qu'**à l'étape e), on superpose ledit ensemble de successions de segments (Si) sur une image (F) de ladite zone (ZO) de manière à obtenir une image composée (IF).

5. Procédé selon l'une quelconque des revendications 1 à 4,
**caractérisé en ce que** ladite zone particulière est une zone géographique.

6. Procédé selon l'une quelconque des revendications 1 à 4,
**caractérisé en ce que** ladite zone particulière est une partie d'un cortex cérébral.

7. Dispositif pour déterminer automatiquement des lignes de crête d'une zone particulière à hauteur variable, ledit dispositif (1) comportant :
- des moyens (3) pour recevoir une image de ladite zone (ZO), qui contient les hauteurs de points de cette dernière ;
- des moyens (8) pour déterminer, à partir de ladite image, des directions d'écoulement (30) ;
- des moyens (9) pour rechercher, à partir desdites directions d'écoulement (30), des points source permettant de créer une image binaire (12), un point source étant un point vers lequel ne conduit aucun point de son voisinage le long desdites directions d'écoulement (30) ;
- des moyens (11) pour réaliser un filtrage de ladite image binaire (12) dans le but de supprimer des points isolés de manière à obtenir des éléments (31) formés de points source adjacents ;
- des moyens (13) pour soumettre les éléments (31) ainsi obtenus à un traitement de manière à obtenir un ensemble de lignes (32) formées de points source ;
- des moyens (15) pour créer, à partir dudit ensemble de lignes, un ensemble de successions de segments (Si) illustrant les lignes de crête de ladite zone (ZO), lesdits moyens (15) comprenant :
• un élément (27) pour effectuer un prétraitement de manière à préparer les données reçues des moyens (13) à une extraction ;
• un élément (28) pour effectuer une extraction de lignes de crête, en réalisant les opérations suivantes :
○ on sélectionne un point de départ, les positions de maximaux locaux représentant des points de départ ; et
○ en procédant de proche en proche, à partir de points voisins du point de départ, on parcourt les lignes de crête jusqu'à ce que l'on rencontre un point de confluence ou une extrémité ; et
• un élément (29) pour effectuer un traitement postérieur afin de supprimer des doublons et de conserver uniquement les segments de longueur supérieure à une longueur de seuil réglable ; et
- des moyens (19) pour transmettre ledit ensemble de successions de segments à des moyens utilisateurs (22).

8. Dispositif selon la revendication 7,
**caractérisé en ce qu'**il comporte, de plus, des moyens (16) pour superposer ledit ensemble de successions de segments (Si) de façon conforme sur une image (F) de ladite zone géographique (ZO) de manière à obtenir une image composée (IF).

9. Dispositif selon l'une des revendications 7 et 8,
**caractérisé en ce qu'**il comporte, de plus, des moyens (20) permettant à un opérateur d'entrer des données dans ledit dispositif (1).

10. Dispositif selon l'une des revendications 7 à 9,
**caractérisé en ce qu'**il comporte, de plus, lesdits moyens utilisateurs (22).

## Patentansprüche

1. Verfahren zum automatischen Bestimmen der Kammlinien einer besonderen Zone variabler Höhe, wobei bei diesem Verfahren automatisch die folgenden aufeinanderfolgenden Schritte realisiert werden:
a) ausgehend von einem Bild der Zone (ZO), das die Punkthöhen dieser letzten umfasst, werden Fließrichtungen bestimmt (30);
b) ausgehend von den Fließrichtungen (30) werden Quellenpunkte ermittelt, welche die Erzeugung eines binären Bildes (I2) ermöglichen, wobei ein Quellenpunkt ein Punkt ist, zu dem hin kein Punkt seiner Umgebung entlang der Fließrichtungen (30) führt;
c) eine Filterung des binären Bildes (I2) wird durchgeführt, um isolierte Punkte zu entfernen, derart, dass Elemente (31) erhalten werden, die von benachbarten Quellenpunkten gebildet sind;
d) die somit erhaltenen Elemente (31) werden einer Behandlung unterzogen, derart, dass eine Gesamtheit von Linien (32) erhalten wird, die von Quellenpunkten gebildet sind; und
e) ausgehend von der Gesamtheit von Linien (32) wird eine Gesamtheit von Aufeinanderfolgen von Segmenten (Si) zur Veranschaulichung der Kammlinien der Zone (ZO) erzeugt, indem die folgenden aufeinanderfolgenden Schritte realisiert werden:
- es wird eine Vorbehandlung durchgeführt, um die in Schritt d) empfangenen Daten für eine Extraktion vorzubereiten;
- es wird eine Extraktion von Kammlinien durchgeführt, indem die folgenden Schritte realisiert werden:
○ es wird ein Ausgangspunkt gewählt, wobei die Positionen von lokalen Maximalwerten Ausgangspunkte darstellen; und
○ durch schrittweises Vorgehen werden ausgehend von Punkten, die dem Ausgangspunkt benachbart sind, die Kammlinien abgefahren, bis ein Einmündungspunkt oder ein Ende angetroffen wird; und
- es wird eine Endbehandlung durchgeführt, um Dubletten zu entfernen und nur die Segmente beizubehalten, deren Länge größer als eine einstellbare Schwellenlänge ist.

2. Verfahren nach Anspruch 1,
**dadurch gekennzeichnet, dass** in Schritt c) zumindest eine mittlere Filterung 3x3 verwendet wird.

3. Verfahren nach einem der Ansprüche 1 und 2,
**dadurch gekennzeichnet, dass** in Schritt d) ein Skelettierungsverfahren verwendet wird, um die Elemente (31) auf eine Gesamtheit von Linien (32) zu reduzieren, die auf diese Elemente zentriert sind und eine Dicke eines Pixels darstellen.

4. Verfahren nach einem der vorhergehenden Ansprüche, **dadurch gekennzeichnet, dass** in Schritt e) die Gesamtheit von Aufeinanderfolgen von Segmenten (Si) über ein Bild (F) der Zone (ZO) gelegt wird, derart, dass ein zusammengesetztes Bild (IF) erhalten wird.

5. Verfahren nach einem der Ansprüche 1 bis 4, **dadurch gekennzeichnet, dass** die besondere Zone eine geographische Zone ist.

6. Verfahren nach einem der Ansprüche 1 bis 4, **dadurch gekennzeichnet, dass** die besondere Zone ein Teil einer Großhirnrinde ist.

7. Vorrichtung zum automatischen Bestimmen der Kammlinie einer besonderen Zone variabler Höhe, wobei die Vorrichtung (1) Folgendes aufweist:
- Mittel (3), um ein Bild der Zone (ZO), das die Punkthöhen dieser letzten umfasst, zu empfangen;
- Mittel (8), um, ausgehend von dem Bild, Fließrichtungen (30) zu bestimmen;
- Mittel (9), um, ausgehend von den Fließrichtungen (30), Quellenpunkte zu ermitteln, welche die Erzeugung eines binären Bildes (12) ermöglichen, wobei ein Quellenpunkt ein Punkt ist, zu dem hin kein Punkt seiner Umgebung entlang der Fließrichtungen (30) führt;
- Mittel (11), um eine Filterung des binären Bildes (I2) durchzuführen, mit dem Zweck, isolierte Punkte zu entfernen, derart, dass Elemente (31) erhalten werden, die von benachbarten Quellenpunkten gebildet sind;
- Mittel (13), um die somit erhaltenen Elemente (31) einer Behandlung zu unterziehen, derart, dass eine Gesamtheit von Linien (32) erhalten wird, die von Quellenpunkten gebildet sind;
- Mittel (15), um, ausgehend von der Gesamtheit von Linien, eine Gesamtheit von Aufeinanderfolgen von Segmenten (Si) zur Veranschaulichung der Kammlinien der Zone (ZO) zu erzeugen, wobei die Mittel (15) Folgendes umfassen:
• ein Element (27), um eine Vorbehandlung durchzuführen, derart, dass die empfangenen Daten der Mittel (13) für eine Extraktion vorbereitet werden;
• ein Element (28), um eine Extraktion von Kammlinien durchzuführen, indem die folgenden Schritte realisiert werden:
○ es wird ein Ausgangspunkt gewählt, wobei die Positionen von lokalen Maximalwerten Ausgangspunkte darstellen; und
○ durch schrittweises Vorgehen werden ausgehend von Punkten, die dem Ausgangspunkt benachbart sind, die Kammlinien abgefahren, bis ein Einmündungspunkt oder ein Ende angetroffen wird; und
• ein Element (29), um eine Nachbehandlung durchzuführen, um Dubletten zu entfernen und nur die Segmente beizubehalten, deren Länge größer als eine einstellbare Schwellenlänge ist; und
- Mittel (19), um die Gesamtheit von Aufeinanderfolgen von Segmenten an Benutzermittel (22) zu übertragen.

8. Vorrichtung nach Anspruch 7,
**dadurch gekennzeichnet, dass** sie, des Weiteren, Mittel (16) aufweist, um die Gesamtheit von Aufeinanderfolgen von Segmenten (Si) auf konforme Weise über ein Bild (F) der geographischen Zone (ZO) zu legen, derart, dass ein zusammengesetztes Bild (IF) erhalten wird.

9. Vorrichtung nach einem der Ansprüche 7 und 8,
**dadurch gekennzeichnet, dass** sie, des Weiteren, Mittel (20) aufweist, die einem Bediener die Eingabe von Daten in die Vorrichtung (1) ermöglichen.

10. Vorrichtung nach einem der Ansprüche 7 bis 9,
**dadurch gekennzeichnet, dass** sie, des Weiteren, die Benutzermittel (22) aufweist.

## Claims

1. Method for automatically determining ridge lines of a particular variable-height area, according to which method the following successive operations are performed automatically:
a) on the basis of an image of said area (ZO), which contains the heights of points therein, flow directions (30) are determined;
b) on the basis of said flow directions (30), source points which make it possible to create a binary image (I2) are sought, a source point being a point towards which no point in its vicinity leads along said flow directions (30);
c) said binary image (I2) is filtered to eliminate isolated points so as to obtain elements (31) formed of adjacent source points;
d) the elements (31) thus obtained are processed so as to obtain a set of lines (32) formed of source points; and
e) on the basis of said set of lines (32), a set of sequences of segments (Si) illustrating the ridge lines of said area (ZO) is created, by performing the following successive operations:
- pre-processing is carried out to prepare the data received from step d) for extraction;
- ridge lines are extracted, by carrying out the following operations :
• a starting point is selected, the positions of local maxima representing starting points ; and
• proceeding step by step, starting from points adjacent to the starting point, the ridge lines are scanned until a point of confluence or an end is reached ; and
- final processing is carried out to eliminate duplicates and preserve only the segments which are longer than an adjustable threshold length.

2. Method according to claim 1, **characterised in that** in step c) at least 3x3 median filtering is implemented.

3. Method according to either claim 1 or claim 2, **characterised in that** in step d) a skeletisation method is implemented to reduce said elements (31) to a set of lines (32), centred on these elements and having a thickness of one pixel.

4. Method according to any one of the preceding claims, **characterised in that** in step e) said set of sequences of segments (Si) is superimposed on an image (F) of said area (ZO) so as to obtain a composite image (IF).

5. Method according to any one of claims 1 to 4, **characterised in that** said particular area is a geographical area.

6. Method according to any one of claims 1 to 4, **characterised in that** said particular area is a portion of a cerebral cortex.

7. Device for automatically determining ridge lines of a particular variable-height area, said device (1) comprising:
- means (3) for receiving an image of said area (ZO), which contains the heights of points therein;
- means (8) for determining flow directions (30) on the basis of said image;
- means (9) for searching, on the basis of said flow directions (30), for source points which make it possible to create a binary image (I2), a source point being a point towards which no point in its vicinity leads along said flow directions (30);
- means (11) for filtering said binary image (I2) in order to eliminate isolated points so as to obtain elements (31) formed of adjacent source points;
- means (13) for processing the elements (31) thus obtained so as to obtain a set of lines (32) formed of source points;
- means (15) for creating, on the basis of said set of lines, a set of sequences of segments (Si) illustrating the ridge lines of said area (ZO), said means (15) comprising:
• an element (27) for carrying out pre-processing so as to prepare the data received from the means (13) for extraction;
• an element (28) for extracting ridge lines by carrying out the following operations:
➢ a starting point is selected, the positions of local maxima representing starting points ; and
➢ proceeding step by step, starting from points adjacent to the starting point, the ridge lines are scanned until a point of confluence or an end is reached ; and
• an element (29) for carrying out subsequent processing in order to eliminate duplicates and preserve only the segments which are longer than an adjustable threshold length; and
- means (19) for transmitting said set of sequences of segments to user means (22).

8. Device according to claim 7, **characterised in that** it further comprises means (16) for superimposing said set of sequences of segments (Si) consistently on an image (F) of said geographical area (ZO) so as to obtain a composite image (IF).

9. Device according to either claim 7 or claim 8, **characterised in that** it further comprises means (20) allowing an operator to enter data into said device (1).

10. Device according to any one of claims 7 to 9, **characterised in that** it further comprises said user means (22).
